# EUROPEAN PATENT SPECIFICATION

(11) **EP 2 211 221 B1**
(45) Date of publication and mention of the grant of the patent: **01.06.2016**
(21) Application number: 09014176.3
(22) Date of filing: 12.11.2009
(51) Int. Cl.: G06T 5/50

(54) **Image outputting system, image outputting method, and image outputting program**
Bildausgabesystem, Bildausgabeverfahren und Bildausgabeprogramm
Système de sortie d'images, procédé de sortie d'images et programme de sortie d'images

(30) Priority: 26.01.2009 JP 2009014293
(43) Date of publication of application: 28.07.2010
(73) Proprietor: Hamamatsu Photonics K.K., Hamamatsu-shi, Shizuoka 435-8558 (JP)
(72) Inventor: Cooke, Jeremy, Welwyn Garden City, Hertfordshire AL7 1BW (GB); Uchiyama, Shigeru, Hamamatsu-shi Shizuoka 435-8558 (JP); Oshiro, Masafumi, Hamamatsu-shi Shizuoka 435-8558 (JP)
(74) Representative: Hoffmann Eitle

(56) References cited:
- US-A1- 2002 071 125
- US-A1- 2004 004 614
- US-A1- 2006 007 533
- US-A1- 2006 239 534

## Description

### BACKGROUND OF THE INVENTION

### Field of the Invention

The present invention relates to an image outputting system, an image outputting method, and an image outputting program for outputting an image used for a virtual microscope or the like.

### Related Background Art

In recent years, a virtual microscope which enables observation on a display by converting an image taken by an optical microscope into digital data has been used in the field of pathology or the like. According to the Japanese Published Unexamined Patent Application No. 2005-37902 (Patent Document 1), an area to be a target of imaging is divided into a plurality of meshes and a plurality of images of each mesh are taken with different focal positions (focal distance) in an imaging direction. Then, only image parts of the thus taken images which are in focus are put together to obtain an image used for the virtual microscope. Every mesh of the thus obtained image is in focus.

### SUMMARY OF THE INVENTION

However, according to the method of the Patent Document 1, in a case where there are a plurality of points to be focal positions in the mesh, there may be a spot which is defocused. Even if the mesh is divided smaller, there is a limit to make a visual field of a high objective lens finer and therefore it is difficult to realize smaller meshes. Moreover, it takes time to obtain an image and convenience of the virtual microscope is reduced. Furthermore, since images with different focal positions are put together, there may be misalignment between images at a joint portion.
US 2002/0071125 A1 teaches a method and an apparatus for optical measurement of a surface profile of a specimen by acquiring different planes in Z direction of a coordinate system. The image contents of all images of the resulting image stack are compared in Z direction at each coordinate point in order to determine a plane therefrom according to predetermined criteria (like best sharpness), the respective plane number is assigned to that coordinate point and stored in a mask image. The 3-D information can be quickly and easily retrieved from the mask image. Furthermore, by selecting an XY coordinate, its respective assigned Z coordinate can be displayed.

The present invention has been made to solve such problems and an object thereof is to provide an image outputting system, an image outputting method, and an image outputting program for easily providing an image which is in focus at any position in the image to be an observation target of a user and is free from misalignment in the image in a virtual microscope or the like.

In order to achieve the above-described object, the image outputting system according to the present invention includes an image storing part for storing a plurality of image data with different focal points in an imaging direction which are images of a predetermined imaging target, specified area inputting means for inputting information specifying an area of the image data stored in the image storing part, focal point information obtaining means for obtaining information which indicates the matching degree of a focal point in a the area of each of the plurality of image data stored in the image storing part which has been specified by the information input by the specified area inputting means, image selection means for selecting an image data to be output from the plurality of image data on the basis of the information indicating the matching degree of the focal point of each of the plurality of image data which has been obtained by the focal point obtaining means, and outputting means for outputting an image data selected by the image selection means.

Additional embodiments are defined in the dependent claims.

According to the image outputting system according to the present invention, information indicating the matching degree of a focal point in a specified area of each of the plurality of image data having different focal positions in the imaging direction is obtained and an image data is selected and output on the basis of the information indicating the matching degree. Therefore, by the image outputting system according to the present invention, the above-described area is specified so as to include a position to be an observation target by the user so that an image in which the area is focused is output. Moreover, by the image outputting system according to the present invention, images are not put together for focusing in one image and therefore an image without misalignment is output.

It is preferable that the image outputting system according to the present invention obtains the plurality of image data to be stored in the image storing part by imaging. According to such a configuration, an image data to be stored in the image storing part can be reliably obtained and therefore the image can be reliably provided.

It is preferable that the specified area inputting means inputs information indicating a position of a cursor which indicates a position in the image data stored in the image storing part and specifies an area on the basis of the position of the cursor. According to this configuration, it becomes possible for a user to easily and surely specify an area and convenience for the user can be improved.

It is preferable that the specified area inputting means detects movement of the cursor and specifies an area on the basis of the position of the cursor in a case where movement of the cursor is detected. According to this configuration, an automatically focused image is output in response to the change in specified positions by the user and therefore convenience for the user can be further improved.

It is preferable that the focal point information obtaining means calculates a value indicating the matching degree of the focal point from a pixel value of a pixel in the area of each image data. According to this configuration, it becomes possible to obtain information indicating an appropriate matching degree of the focal point and therefore a surely focused image can be output.

It is preferable that the focal point information obtaining means calculates a value indicating variation between pixel values in an area of each of the image data as a value indicating the matching degree of the focal point. According to this configuration, it becomes possible to obtain information indicating a more appropriate matching degree of the focal point and therefore a more surely focused image can be output.

It is preferable that the focal point information obtaining means calculates a value indicating the matching degree of a focal point from a pixel value regarding a specific color. According to this configuration, it becomes possible to focus on a specific target having uniqueness in color.

It is preferable that the specified area inputting means inputs information indicating the position of the area in the image data as information specifying the area in the image data stored in the image storing part and the focal point information obtaining means divides the image data into a plurality of areas, stores information indicating the matching degree of a focal point of each area in advance, and obtains information indicating the matching degree of the focal point of an area in which the position that has been indicated by the information input by the specified area inputting means is included. According to this configuration, it becomes unnecessary to calculate matching degree of the focal point when an image data is output and therefore it becomes possible to shorten the time from specification of an area in the image data to output of the image data.

Meanwhile, not only can the present invention be described as the image outputting system as described above, the present invention can be described as an image outputting method and an image outputting program as described below. Although a category or the like differs, these are substantially the same invention and have the same effect.

That is, the image outputting method according to the present invention is an image outputting method by an image outputting as defined in claim 1 system including an image storing part for storing a plurality of image data with different focal points in the imaging direction which are images of a predetermined imaging target and includes a specified area inputting step for inputting information specifying an area of the image data stored in the image storing part, a focal point information obtaining step for obtaining information indicating the matching degree of focal points of the area of each of the plurality of image data stored in the image storing part and which has been specified by the information input in the specified area inputting step, an image selection step for selecting an image data to be output from the plurality of image data on the basis of information indicating the matching degree of focal points of each of the plurality of image data obtained in the focal point information obtaining step, and an outputting step for outputting an image data selected in the image selection step.

The image outputting program according to the present invention causes a computer to carry out an image storage function for storing a plurality of image data with different focal points in an imaging direction which are images of a predetermined imaging target, a specified area inputting function for inputting information specifying an area of the image data stored by the image storage function, a focal point information obtaining function for obtaining information indicating the matching degree of a focal point of the area of each of the plurality of image data stored by the image storage function and which has been specified by the information input by the specified area inputting function, an image selection function for selecting an image data to be output from the plurality of image data on the basis of information indicating the matching degree of the focal point of each of the plurality of image data obtained by the focal point information obtaining function, and an outputting function for outputting an image data selected by the image selection function.

According to the present invention, the area is specified so as to include a position which is an observation target by the user. Therefore, an image which is focused in the area can be output. Moreover, according to the present invention, images are not put together to match focal points in one image and therefore an image without misalignment can be output. That is, according to the present invention, it becomes possible to easily provide an image which is focused at any point in the image which is to be an observation target by the user and is free from misalignment in the image.

### BRIEF DESCRIPTION OF THE DRAWINGS

FIG 1 is a view showing a configuration of an image outputting system according to an embodiment of the present invention.
FIG 2 is a view showing a standard focus surface when an image is taken by a microscope device.
FIG 3 is a view showing a focal point position (image surface) when an image is taken by the microscope device.
FIG 4 is a view showing a configuration of image data to be output by the image outputting system.
FIG 5 is a view showing a first example of a method for changing a focal point in response to specification of an observation position.
FIG 6 is a view showing a second example of a method for changing a focal point in response to specification of an observation position.
FIG 7 is a view showing a third example of a method for changing a focal point in response to specification of an observation position.
FIG 8 is a view showing a fourth example of a method for changing a focal point in response to specification of an observation position.
FIG 9 is a sequence diagram showing processing (image outputting method) carried out by the image outputting system according to the embodiment of the present invention.
FIG 10 is a sequence diagram showing another example of processing (image outputting method) carried out by the image outputting system according to the embodiment of the present invention.
FIG 11 is a view showing a method for obtaining information indicating a matching degree of a focal point in a specified position of the image data.
FIG 12 is a view showing a configuration of an image outputting program according to an embodiment of the present invention.

### DESCRIPTION OF THE PREFERRED EMBODIMENTS

Hereinafter, preferred embodiments of the image outputting system and the image outputting method according to the present invention will be explained in detail with reference to the drawings. Here, the same reference numerals are given to the same components and redundant explanation thereof is omitted.

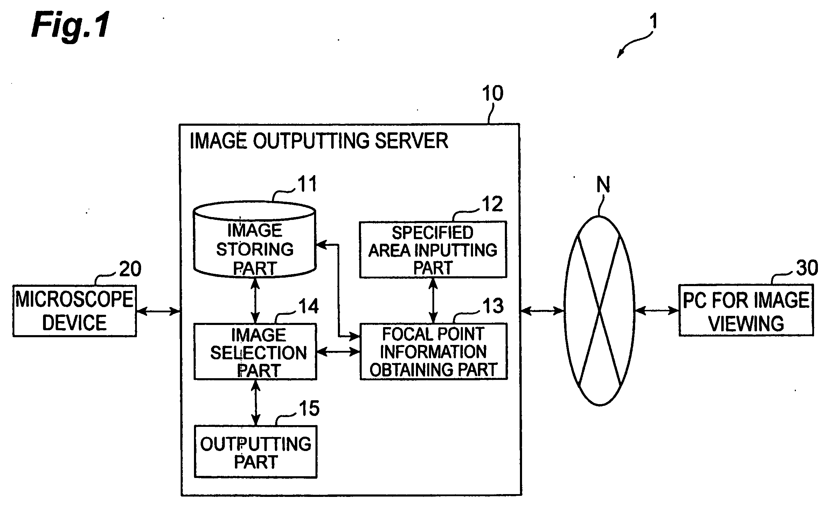

FIG 1 shows configuration of an image outputting system 1 according to the present embodiment. The image outputting system 1 includes an image outputting server 10. Moreover, the image outputting system 1 may include a microscope device 20 and a personal computer (PC) for image viewing 30. The image outputting system 1 causes the image outputting server 10 to store data of an image (image data) taken by the microscope device 20 and outputs the image data from the image outputting server 10 in response to a request from a user (e.g., the PC for image viewing 30). Specifically, the image outputting system 1 is equivalent to a virtual microscope system.

As described above, the image outputting server 10 stores image data and outputs the image data in response to a request. Functions of the image outputting server 10 will be described in greater detail later. The microscope device 20 takes an image of a predetermined imaging target (observation target) to obtain an image obtained by the imaging as an image data. Targets of imaging for the microscope device 20 include, for example, a specimen slide (prepared slide) in which a biological sample such as a tissue section is sealed on a slide glass in a case where image data used in a virtual microscope system are obtained. As the microscope device 20, specifically, an optical microscope for scanning an image by a scanning method is used. Using such a device enables obtaining, for example, an image data having a high resolution of 2 billion pixels.

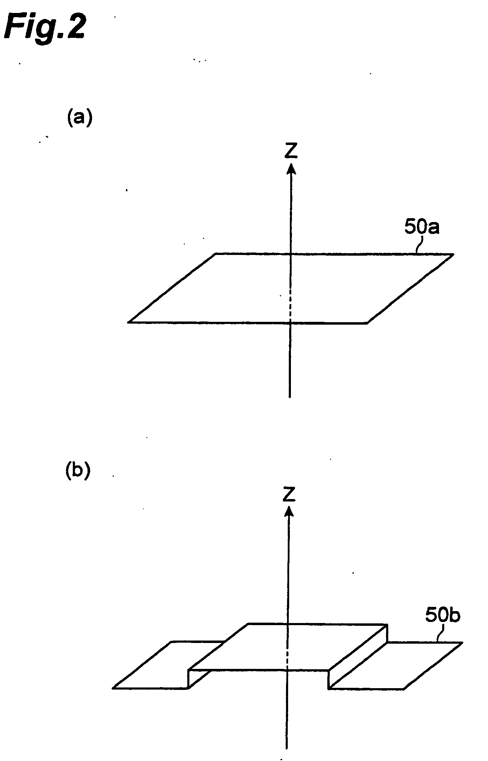

The microscope device 20 carries out a plurality of times of image taking for one imaging target with different focal points in an imaging direction (focal depth direction). Thus, a plurality of image data with different focal points can be obtained. For example, the plurality of images with different focal points are obtained as follows. First, one focus point for (a surface, which is perpendicular to the imaging direction, of) a small specimen slide, three points for a case of a medium-sized specimen slide, and four points for a case of a large-sized specimen slide, are specified and automatic focusing (focal point) is obtained at each focus point. The automatic focusing is carried out by, for example, calculating a position (Z point) in an imaging direction (Z direction) where a largest pixel value can be obtained in an adjacent region including the focus point. If there is one focus point, a plain surface perpendicular to the Z direction which passes the Z position, if there are three points, a plain surface including the three points, and if there are a plurality of points, a plain surface nearest to all the points is set to be a standard focus surface 50a, as shown in FIG 2 (a). The microscope device 20 carries out imaging while setting the standard focus surface 50a as a focal position (imaging surface) and obtains an image data.

If the target for imaging is extremely large, there may be a case where focusing cannot be carried out with one plain surface because of distortion of a glass slide or the like. In such a case, the plain surface may be divided with a regular interval and a standard focus surface may be obtained for each of the divided parts. In this case, a plurality of standard focus surfaces for each of the parts are united as shown in FIG 2 (b) to generate one standard focus surface 50b.

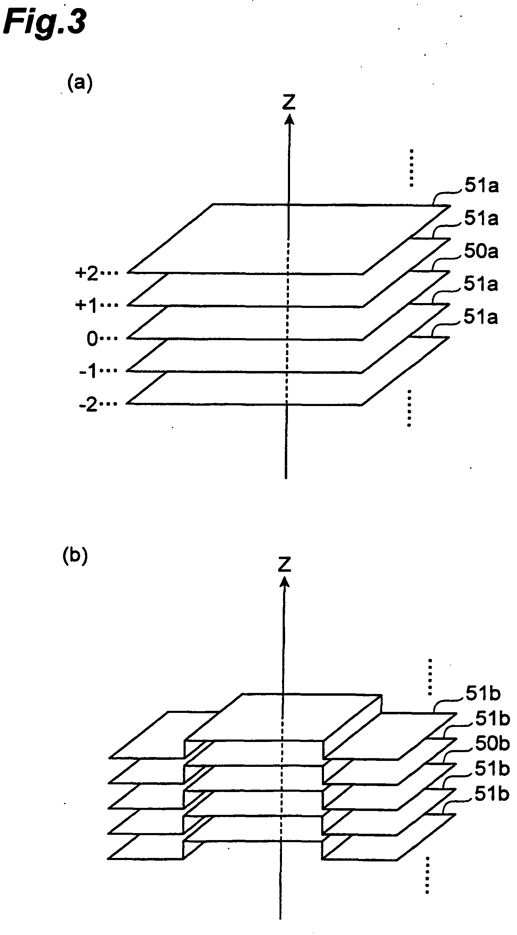

While sandwiching the thus obtained standard focus surfaces 50a and 50b, imaging is carried out by setting surfaces 51a and 51b which are respectively obtained by shifting the Z position in + and - directions (a direction in which focal position becomes further and a direction in which focal position becomes nearer, respectively) as shown in FIG 3 to obtain a plurality of image data (FIG 3 (a) and Fig. 3(b) are surfaces respectively showing focal positions corresponding to the standard focus surfaces 50a and 50b of FIG .2 (a) and FIG 2 (b)).

For example, nine image data having different focal positions in the imaging direction are obtained. Here, the number for shifting the imaging surface in + and - direction may not be equal to each other. Moreover, it is efficient if an interval between each imaging surface is approximately the same as focus depth of an objective lens of the microscope device 20 (a range in which focusing can be carried out, e.g., 0.5 to 1 micron). That is, with the above-described interval, it becomes possible to focus in a wider range in the imaging direction while it becomes possible to prevent generation of a defocused part.

The microscope device 20 is connected to the image outputting server 10 by a cable or the like and can transmit and receive data. The microscope device 20 transmits a plurality of the thus obtained image data respectively having different Z positions to the image outputting server 10. The image transmitted to the image outputting server 10 may be correlated to information for specifying the series of image data such as an ID number, or information indicating the Z position of each of the image data (e.g., plane number) or the like.

The PC for image viewing 30 is used by a user and is for observing an image data stored in the image outputting server 10. The image outputting system 1 may include a plurality of PCs for image viewing 30. The PC for image viewing 30 is connected to the image outputting server 10 via Internet N or the like and can transmit and receive data. The PC for image viewing 30 receives an image data transmitted from the image outputting server 10 in response to a request (from the PC for image viewing 30) and displays the image data on a display device such as a display included in the PC for image viewing 30. Moreover, the PC for image viewing 30 has an input device such as a mouse. By operation of a cursor displayed in a superimposing manner on the image data, which is displayed on the display device, the input device or the like enables specifying an observation position in the thus displayed image data. The PC for image viewing 30 transmits information indicating the observation position thus specified to the image outputting server 10. The information indicating the observation position is, for example, information indicating coordinates in the image data (XY position information). In the present image outputting system 1, an image data which is focused at the specified observation position is displayed by a function described below.

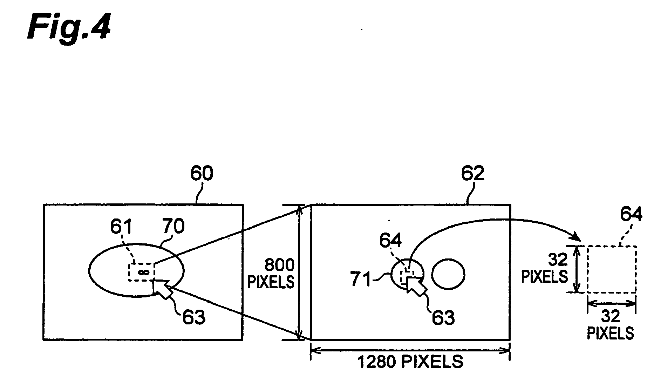

Display of the image data by the PC for image viewing 30 is carried out as follows: A viewing field 61 which is a part of a low magnification image 60 showing the whole of the image data is specified and a high magnification image (display, viewing field) 62 which is an image data thereof is displayed, as shown in FIG 4. Thus, it becomes possible to observe a specific cell 71 of a tissue 70 photographed in the low magnification image 60. Here, the low magnification image 60 can be obtained by, for example, decreasing resolution of an entire image taken by the microscope device 20.

Specification of the part 61 of the high magnification image 62 of the low magnification image 60 and specification of the observation position in the high magnification image 62 is carried out by a cursor 63 which is displayed in a superimposing manner in each of the images. Specifically, for example, specification is carried out when the mouse is clicked. The information indicating the position specified by the cursor 63 as described above is transmitted from the PC for image viewing 30 to the image outputting server 10. Here, the low magnification image 60 may be displayed as a thumbnail in a superimposing manner on the high magnification image 62 (e.g., in a display area on the right lower side of the display screen) so as to easily specify the high magnification image 62.

Subsequently, functions of the image outputting server 10 will be explained. As shown in FIG 1, the image outputting server 10 includes the image storing part 11, a specified area inputting part 12, a focal point information obtaining part 13, an image selection part 14, and an outputting part 15.

The image storing part 11 is for storing a plurality of image data taken by the microscope device 20. The image storing part 11 is specifically equivalent to a memory unit such as a memory or a storage included in the image outputting server 10. An image data transmitted from the microscope device 20 is received by the image outputting server 10 and stored in the memory unit such as the memory or the storage. The image storing part 11 stores the image data while correlating the data to information such as an ID for specifying the image data, information indicating the Z position of each of the image data, or the like.

The specified area inputting part 12 is specified area inputting means for inputting information specifying an area in the image data stored in the image storing part 11. The specified area inputting part 12 receives predetermined information from the PC for image viewing 30 via Internet N to input (specify) the information. This area is an area where matching of the focal point is determined (whether the area is focused or not). Specifically, the area is determined by, for example, XY position information of the position specified as the observation position in the high magnification image 62 shown in FIG 4.

The specified area inputting part 12 receives information indicating a position of the cursor 63 which indicates the observation position in the high magnification image 62 from the PC for image viewing 30. Subsequently, the specified area inputting part 12 specifies an area 64 on the basis of the positional relationship between the position on the specified image data and the area 64 (e.g., the specified position is the center position of the area 64, or the like). Rectangular, circular, or other shapes may be used as the shape of the area 64 as shown in FIG 4. Here, information indicating positional relationship between the position specified above and the area 64 and information indicating size of the area 64 are set in advance and stored in the specified area inputting part 12. Otherwise, these information may be collectively specified by the PC for image viewing 30. The specified area inputting part 12 outputs information indicating the input area 64 (size and position) to the focal point information obtaining part 13.

As shown in FIG 4, if resolution of the high magnification image 62 (e.g., corresponding to the resolution of display of the PC for image viewing 30) is 1,280 pixels (horizontally) x 800 pixels (vertically) (approximately 1 million pixels), it is preferable that the area 64 has a size of at least 32 pixels x 32 pixels (approximately 1000 pixels). This is because for determination of matching of focal points, such an amount of pixels is required at minimum.

The focal point information obtaining part 13 is focal point information obtaining means for obtaining information indicating the matching degree of the focal point in the area specified by the information input by the specified area inputting part 12 in each of the plurality of image data having different focal points (Z positions) which are stored in the image storing part 11. The matching degree of the focal point is generally indicated by contrast of the area and one having higher contrast has a higher matching degree.

Specifically, the focal point information obtaining part 13 obtains a pixel value of an area in each of the plurality of image data specified by the information input by the specified area inputting part 12 from the image storing part 11. The focal point information obtaining part 13 calculates a value indicating the matching degree of the focal point to each of the image data from the obtained pixel value. Calculation is carried out by using, for example, luminance as the pixel value and standard deviation of the luminance within the above-described range is calculated. The thus calculated value is assumed to be a value indicating the matching degree of the focal point. In this case, a larger value means a higher matching degree in the focal point. Moreover, difference between the largest value and the smallest value of luminance within the above-described range may be calculated (detected) and the calculated value may be assumed to be a value indicating the matching degree of the focal point. In this case, a larger value means a higher matching degree in the focal point. As described above, it is preferable that a value indicating deviation of pixel values of pixels in the above-described area is used as a value indicating the matching degree of the focal point. Otherwise, maximum or minimum luminance of the above-described range may be calculated (detected) and the calculated value may be used as a value indicating the matching degree of the focal point. In a case where the maximum luminance is used, a larger value means a higher matching degree of the focal point. In a case where the minimum luminance is used, a smaller value means a higher matching degree of the focal point.

Furthermore, other than calculating a value indicating the matching degree of the focal point by use of all the luminance values of red, green, and blue which configure the image data, a value indicating the matching degree of the focal point may be calculated by using a luminance value of a specific color. This is effective for a case where it is desired to focus on a specific object having uniqueness in color. For example, in a case where it is desired to focus on a red blood cell included in an observation target, only luminance value of red may be an object of calculation of a value indicating the matching degree of the focal point. Otherwise, if it is desired to focus on other focal point but the red blood cell, luminance value of an object another than red may be an object of calculation.

The focal point information obtaining part 13 correlates information indicating the matching degree of the focal point in the area to information indicating each of the plurality of image data and outputs the information to the image selection part 14.

The image selection part 14 is image selection means for selecting an image data to be output to the PC for image viewing 30 from the plurality of image data on the basis of information indicating the matching degree of the focal point to the plurality of image data input by the focal point information obtaining part 13. The image selection part 14 selects one having the highest matching degree of the focal point from the plurality of image data as the image data to be output. The image selection part 14 obtains the selected image data from the image storing part 11 and outputs the selected data to the outputting part 15. Here, if the image data to be output to the PC for image viewing 30 is not the entire image data but the high magnification image 62, the image selection part 14 cuts out a part to be output from the entire data to obtain the data (in this case, information indicating the high magnification image 62 is received from the PC for image viewing 30 by the image outputting server 10).

The outputting part 15 is outputting means for outputting the image data selected by the image selection part 14 to the PC for image viewing 30. Outputting to the PC for image viewing 30 is carried out by transmitting the image data via Internet N.

In the image outputting system 1, the image data, which is focused in response to the position of the cursor or the like in the image data as described above, is transmitted from the image outputting server 10 to the PC for image viewing 30 and is displayed by the PC for image viewing 30. That is, the image is automatically focused. Timing for the automatic focusing will be explained.

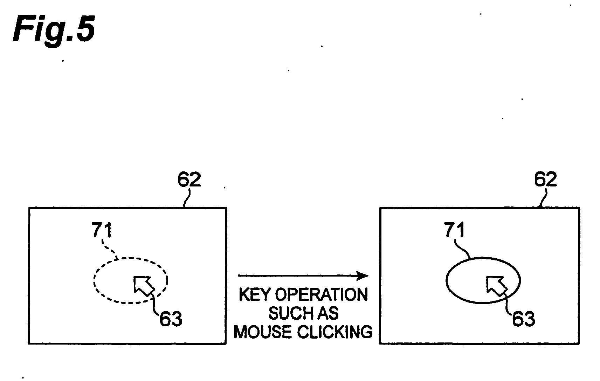

In the above-described example, when the mouse is clicked in the PC for image viewing 30, position of the cursor 63 in the high magnification image 62 is detected and transmitted as information indicating an area for detection of matching degree of the focal point (information to be input to the specified area inputting part 12), as shown in FIG 5. Here, a cell 71, which is an observation target shown by broken lines in FIG 5, indicates that the cell is not focused, while a cell 71 shown by a solid line indicates that the cell is focused (the same is applied hereinafter). Timing when automatic focusing is carried out is not limited only to an occasion when the mouse is clicked or the like, as described above.

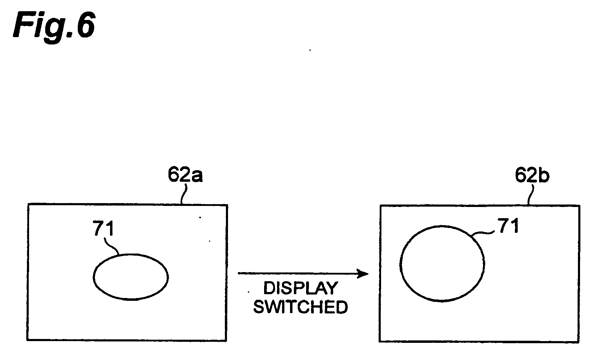

For example, automatic focusing may be carried out even when the high magnification image 62 displayed on the PC for image viewing 30 is switched (from a high magnification image 62a to a high magnification image 62b) as shown in FIG 6. This switching is carried out by using operation of the PC for image viewing 30 by a user as a trigger. In this case, focusing may be carried out from the area on the basis of the position of the cursor as described above. However, the focusing may be carried out setting the whole of the high magnification image 62a as a target of focusing.

That is, the information specifying an area to be input to the specified area inputting part 12 of the image outputting server 10 indicates the whole area of the high magnification image 62. In this case, information regarding switching of the high magnification image 62 is transmitted from the PC for image viewing 30 to the image outputting server 10 as information indicating an area for focusing. Thus, the high magnification image 62 after switching becomes the best-focused image as a whole of the screen.

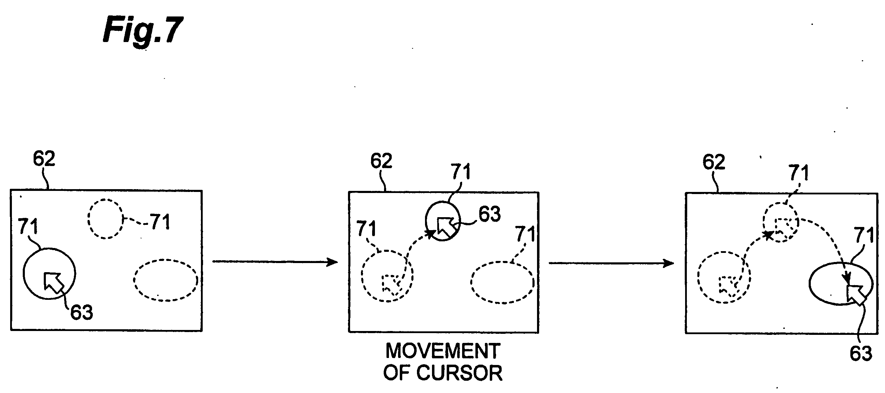

Moreover, in response to the movement of the cursor 63 (i.e., movement of the mouse) in the high magnification image 62, the position of the cursor 63 may be detected as the position indicating an area for focusing (information of the position may be transmitted to the image outputting server 10) to carry out automatic focusing as shown in FIG 7. In this case, position of the cursor 63 may be detected, for example, at regular time intervals (e.g., every 1 second) by the PC for image viewing 30. Otherwise, position of the cursor 63 may be detected after the cursor 63 is moved and the movement is detected.

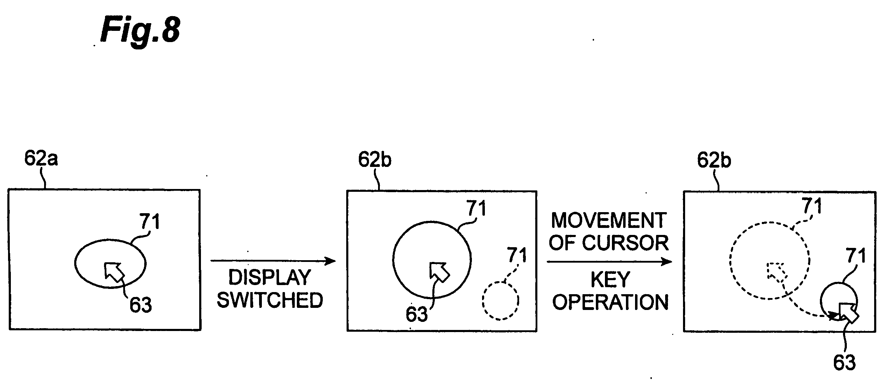

Furthermore, automatic focusing may be carried out by combination of the above, as shown in FIG 8. That is, when switching of the high magnification image 62 is carried out and the mouse is clicked or the cursor 63 is moved, position indicating an area for focusing may be detected (information of the position may be transmitted to the image outputting server 10) and automatic focusing may be carried out.

As described above, the PC for image viewing 30 may have a function to control timing for automatic focusing. That is, the PC for image viewing 30 can have a function of the specified area inputting means for inputting information specifying an area in the image data stored in the image storing part 11 of the image outputting server 10.

Specifically, a computer including a hardware such as a central processing unit (CPU), a memory, and a disk device is used as the image outputting server 10 and operation thereof causes each device to exercise its function. Moreover, the PC for image viewing 30 also has a similar hardware configuration in general.

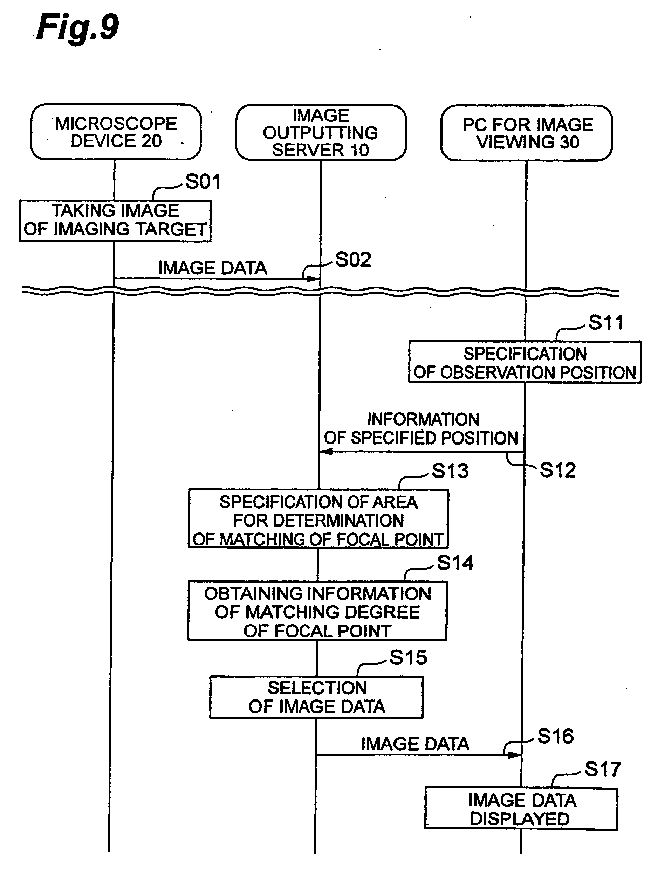

Subsequently, processing carried out by the image outputting system 1 (image outputting method) will be explained using the sequence diagram of FIG 9.

First, an image of an imaging target is taken by the microscope device 20 and an image is obtained from the taken image (S01, imaging step). As described above, this imaging is carried out several times from different focal points and a plurality of image data having different focal points are obtained. The imaging is carried out on the basis of, for example, operation by an operator. The thus obtained image data are transmitted from the microscope device 20 to the image outputting server 10 (S02). The image data are received by the image outputting server 10 and stored in the image storing part 11. These are processings carried out until the image data is stored in the image storing part 11 of the image outputting server 10.

Subsequently, processing for outputting the image data is carried out by the image outputting server 10 and the PC for image viewing 30. It is not necessary that this processing is carried out following the above-described processing (S01, S02) of storing the image data in the image storing part 11 of the image outputting server 10. This processing is started when, for example, a request for image data is made from the PC for image viewing 30 to the image outputting server 10 on the basis of operation by a user or the like. In the processing according to the request of the image data, the image data to be obtained by the PC for image viewing 30 (a series of image data obtained by imaging of one imaging target) may be specified.

In this processing, observation position on the image data is specified by the PC for image viewing 30 (S11). Here, the above-described method in FIG. 5 to 8 is used as a method for specification of the observation position. For example, as described above, the position is specified on the basis of the position of the cursor on the image data displayed on the PC for image viewing 30 when a user operates the mouse. It is preferable that specification of the observation position is carried out while referring to the displayed image data. Therefore, the low magnification image 60 as shown in FIG. 4 may be obtained from the image outputting server 10 by the PC for image viewing 30 to be displayed on the PC for image viewing 30 and the position in the thus displayed low magnification image 60 is specified (including the observation position), so that the high magnification image 62 may be obtained before this processing. Here, each of the image data obtained by the PC for image viewing 30 is basically image data of a standard focus surface.

After the observation position is specified, information indicating the specified position is transmitted from the PC for image viewing 30 to the image outputting server 10. The transmitted information is received by the specified area inputting part 12 in the image outputting server 10 (S 12, specified area inputting step). Subsequently, an area to be used for determination of matching of a focal point is specified by the specified area inputting part 12 on the basis of the information (S13, specified area inputting step). The information indicating the specified area is input from the specified area inputting part 12 to the focal point information obtaining part 13.

Subsequently, a pixel value of the area in each of the plurality of image data specified by the information input by the specified area inputting part 12 is obtained from the image storing part 11 by the focal point information obtaining part 13. Then, a value indicating the matching degree of the focal point to each image data is calculated by the focal point information obtaining part 13 from the thus obtained pixel value (S 14, focal point information obtaining step). The thus obtained values indicating the matching degree of the focal point are correlated to information indicating each of the plurality of data and output from the focal point information obtaining part 13 to the image selection part 14.

Next, an image data to be output to the PC for image viewing 30 is selected from the plurality of image data by the image selection part 14 on the basis of information indicating the matching degree of the focal point to each of the plurality of image data input from the focal point information obtaining part 13 (S15, image selection step). The thus selected image data is obtained by the image selection part 14 from the image storing part 11 and output to the outputting part 15.

Next, the image data selected by the image selection part 14 is transmitted to the PC for image viewing 30 by the outputting part 15 (S16 outputting step). The image data is received by the PC for image viewing 30 and is output to be displayed (S17, outputting step). These are processings for outputting an image data by the image outputting server 10 and the PC for image viewing 30. Here, the processing in S 11 to S 17 is repeatedly carried out every time the observation position in the PC for image viewing 30 is specified.

As described above, according to the present embodiment, a user can refer to image data which is always focused at a specified observation point among a plurality of image data having different focal points which are stored in the image outputting server 10. Moreover, in the present embodiment, image data are not put together to match a focal point in one image and therefore it becomes possible to refer to an image without a misaligned part which is caused by putting the image data together or the like. That is, according to the present embodiment, it becomes possible to easily provide an image which is focused at any position to be an observation target of a user in the image and is free from generation of a misaligned part. Here, there may be a case where a plurality of image data are put together to, for example, generate an image of the focus surface shown in FIG 2 (b) in the present embodiment. However, this is not for matching a focal point in one image but for generation of an image having a special focus surface. In such a case, even if a portion including an aligned part is displayed, an image without misalignment can be output.

Here, in the present embodiment, the image outputting system 1 includes the microscope device 20 and the PC for image viewing 30. However, these are not necessarily included in the system and the image outputting system 1 may only include the image outputting server 10 in which the image data are stored. However, if the microscope device 20 is included in the image outputting system 1, the image data stored in the image storing part 11 of the image outputting server 10 can be reliably obtained and therefore the image can be reliably provided.

Moreover, if an area where matching of a focal point is specified by the cursor displayed in the PC for image viewing 30, it becomes possible for a user to easily and surely specify an area and convenience for a user can be improved. Furthermore, if the movement of the cursor is detected to specify an area, it becomes possible to output an image which is automatically focused in response to change in a specified position by the user. Therefore, it becomes possible to further improve convenience for the user.

In addition, as described above, if a value indicating the matching degree of the focal point is calculated on the basis of the pixel value of the image data, information indicating the appropriate matching degree of the focal point can be obtained. Therefore, it becomes possible to output an image which is reliably focused.

Furthermore, since only focused image data as in the present embodiment is transmitted from the image outputting server 10 to the PC for image viewing 30, amount of data to be transmitted and received between the image outputting server 10 and the PC for image viewing 30 is very small when automatic focusing is carried out (e.g., some MB for raw data of a high magnification image of the image data and data size can be reduced to one-tenth to one-twentieth of the original size when compressed). Therefore, as in the present embodiment, even if the image outputting system 1 is connected via Internet N, time until a focused image is displayed can be shortened and user's frustration can be reduced.

However, if a line between the image outputting server 10 and the PC for image viewing 30 is efficiently fast, configuration of the present invention is not limited to the above-described one. That is, the PC for image viewing 30 may have functions which correspond to each functional part of the image outputting server 10 of the above-described embodiment.

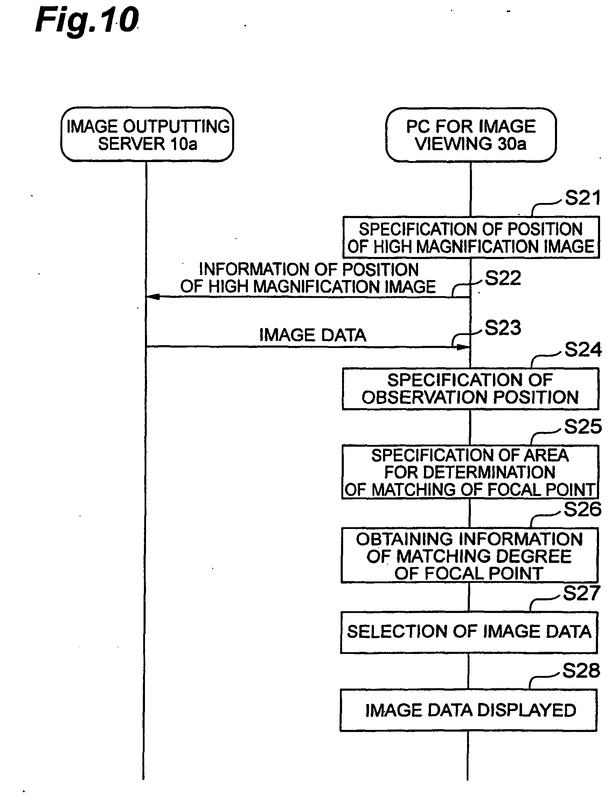

Processing carried out between an image outputting server 10a and a PC for image viewing 30a in this case is shown in a sequence diagram of FIG 10 (in the sequence diagram of FIG 10, processing until an image data is stored in the image storing part of the image outputting server 10a is the same processing as the processing in S01 and S02 of FIG 9 and therefore figures and explanation thereof are omitted here).

In the present processing, specification of a position of the high magnification image 62 in the whole of the image data is carried out by the PC for image viewing 30a (S21). Information indicating the position of the thus specified high magnification image 62 is transmitted from the PC for image viewing 30a to the image outputting server 10a (S22).

In the image outputting server 10a, the information is received and the high magnification image 62 in the position indicated by the information is obtained from all the plurality of image data having different focal points which are stored in the image storing part. The plurality of the thus obtained high magnification images 62 having different focal points are transmitted from the image outputting server 10a to the PC for image viewing 30a (S23).

Subsequently, the plurality of high magnification images 62 having different focal points are received by the PC for image viewing 30a and are used for displaying an image data which is focused as described below. In the PC for image viewing 30a, specification of an observation position in the high magnification image 62 is carried out (S24, specified area inputting step (equivalent to S11)). Here, for the specification of the observation position, it is preferable that the high magnification image 62 of a standard focus surface is displayed. Specification of the observation position here is within the range of the high magnification image 62 whose position has been specified in S21 and in a case where the high magnification image 62 is switched to another image, processing from S21 is carried out again.

Next, if the observation position is specified, the PC for image viewing 30a specifies an area used for determination of matching of a focal point on the basis of the specified position (S25, specified area inputting step (corresponding to S13)). Then, pixel values of the specified area in each of the plurality of high magnification images 62 are obtained. Subsequently, values indicating the matching degree of focal points to each of the high magnification images 62 are calculated from the thus obtained pixel values (S26, focal point information obtaining step, (corresponding to S14)). On the basis of information indicating the matching degree of focal points to each of the plurality of the thus calculated image data, one high magnification image 62 to be output for displaying is selected from the plurality of high magnification images 62 (S27, image selection step (corresponding to S 15)). Then, the thus selected image data is output for displaying (S28, outputting step (corresponding to S16 and S 17)). These are the processings for outputting by the image outputting server 10a and the PC for image viewing 30a. Here, the processing between S24 to S28 is repeatedly carried out every time an observation position in the PC for image viewing 30a is specified.

According to the above-described configuration and processing, it is possible to refer to an image data which is always focused at a specified observation position among a plurality of image data having different focal positions which are stored in the image outputting server 10. Moreover, image data are not put together to match a focal point in one image and therefore it becomes possible to refer to an image without a misaligned part which is caused by putting the image data together or the like. Furthermore, according to the present configuration, load of the image outputting server 10a is reduced and it becomes possible to provide image data to many PCs for image viewing 30a.

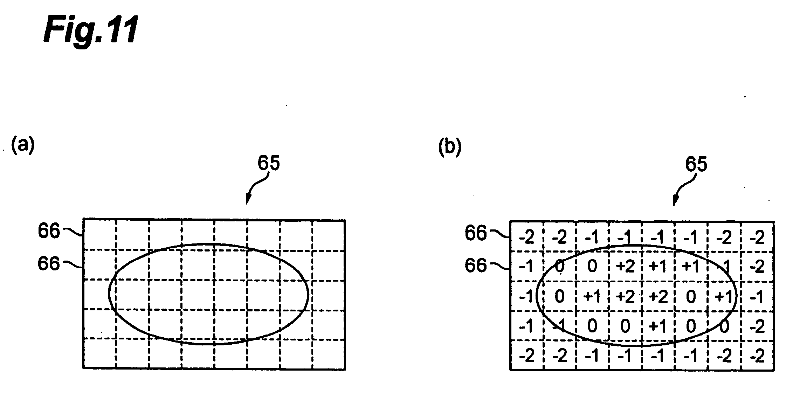

In the above-described embodiments, the matching degree of the focal point in the area corresponding to the observation position is calculated after the observation position is specified. However, a display area 65 of the whole of an image data may be divided into a plurality of areas 66 in advance, the focal point information obtaining part 13 may store information indicating the matching degree of the focal points in each of the areas 66, as shown in FIG 11 (a) in advance, and a value indicating the matching degree of the focal point may be obtained by use of the information. As the areas 66, for example, one generated by dividing the display area 65 in a reticular pattern may be used.

The information indicating the matching degree of the focal point to be stored by the focal point information obtaining part 13 includes, for example, information of the Z position in an image data having the highest matching degree in each of the areas 66, which indicates the difference from the standard focus surface. For example, in the case of "+2," this indicates that this is an image data in which the Z position is shifted by two in + direction from the standard focus surface, as shown in FIG 3 (a). This information can be obtained by calculating values indicating the matching degree of the above-described focal point of all the areas 66. The calculation can be appropriately carried out after an image is taken and an image data are obtained. Moreover, the calculation may be carried out by the image outputting server 10 or by another apparatus.

According to this configuration, the specified area inputting part 12 receives information indicating the position in the image data from the PC for image viewing 30 and outputs the information to the focal point information obtaining part 13. The focal point information obtaining part 13 determines in which area 66 the position input by the specified area inputting part 12 is included and obtains information indicating the matching degree of the focal point correlated to the area 66 including the position. The focal point information obtaining part 13 outputs information indicating the matching degree of the focal point to the image selection part 14 and the image selection part 14 selects an image data on the basis of the information.

According to this configuration, it is not required to calculate the matching degree of the focal point when the image data is output and therefore it becomes possible to shorten the time from specification of an area in an image data until outputting of the image data. Moreover, it becomes possible to reduce the load of the image outputting server 10 when the image data is output.

Here, in a case where the display area 65 of the whole of the image data is divided, the plurality of the areas 66 may be independent pixels. In this case, the area for which matching of the focal point is determined is decided on the basis of, for example, positional relationship between the position of the pixel and the position of the area (e.g., position of the pixel is the center position of the area, or the like) similar to the above-described embodiment.

Moreover, in the series of the above-described embodiments, a device for storing image data (image data outputting server) and a device for displaying the image data (PC for image viewing) are independently prepared. However, a device in which these are integrally prepared as one may be used. Furthermore, in the present embodiment, a focal point is matched to the high magnification image 62 which is a part of the whole of the image data. However, in a case where, for example, the whole of the image data is not so large-sized, the focal point may be matched with the whole of the image data as a target of focusing.

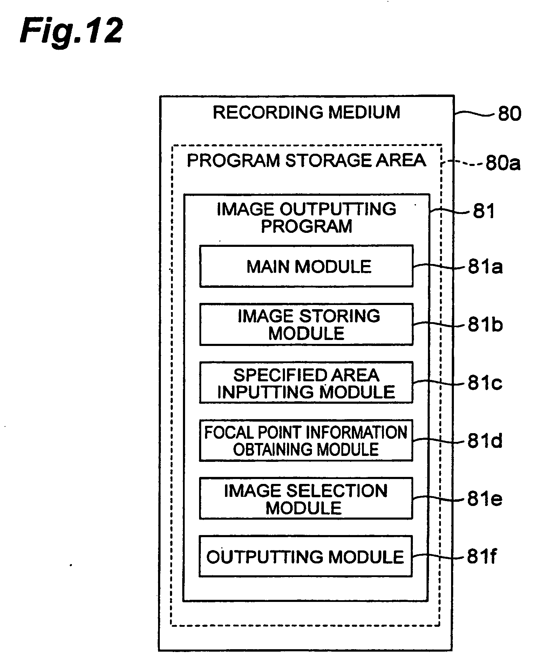

Subsequently, an image outputting program for causing a computer to carry out processing for the series of the above-described image outputting of the image outputting system 1 (image outputting server 10) will be explained. As shown in FIG 12, an image outputting program 81 is stored in a program storage area 80a formed in a recording medium 80 included in the computer.

The image outputting program 81 includes a main module 81 a for holistically controlling image outputting processing, an image storing module 81 b, a specified area inputting module 81 c, a focal point information obtaining module 81 d, an image selection module 81e, and an outputting module 81f. Functions realized by causing the image storing module 81 b, the specified area inputting module 81 c, the focal point information obtaining module 81 d, the image selection module 81 e, and the outputting module 81 f to carry out the program are the same as the functions of the above-described image storing part 11, the specified area inputting part 12, the focal point information obtaining part 13, the image selection part 14, and the outputting part 15 of the image outputting server 10, respectively.

Here, a part or all of the image outputting program 81 may be transmitted via a communication medium such as a communication line and received by another device to be recorded (including installation).

## Claims

1. An image outputting system comprising:
an image storing part (11) for storing a plurality of images (60, 62) with different focal points in an imaging direction which are images of a predetermined imaging target, as image data;
specified area inputting means (12) for receiving, from a PC (30) information specifying an area (64) of the images stored in the image storing part (11);
**characterized by** focal point information obtaining means (13) for obtaining information indicating a matching degree of a focal point in the area (64) of each of the plurality of images (60, 62) which has been specified by the information input by the specified area inputting means, stored in the image storing part;
image selection means (14) for selecting an image (60, 62) to be output from the plurality of images (60, 62) on the basis of the information indicating the matching degree of the focal point of each of the plurality of images which has been obtained by the focal point obtaining means (13); and
outputting means (15) for outputting the image (60, 62) which is stored in the image storing part (11) and selected by the image selection means (14).

2. The image outputting system according to claim 1 further comprising imaging means for obtaining the plurality of images (60, 62) stored in the image storing part (11) by imaging.

3. The image outputting system according to claim 1 or 2, wherein the specified area inputting means (12) is adapted to input information indicating a position of a cursor (63) which indicates a position in the images (60, 62) stored in the image storing part (11) and to specify the area (64) on the basis of the position of the cursor (63).

4. The image outputting system according to claim 3, wherein the specified area inputting means (12) is adapted to detect movement of the cursor (63) and to specify the area (64) on the basis of the position of the cursor (63) in a case where movement of the cursor (63) is detected.

5. The image outputting system according to any one of claims 1 to 4, wherein the focal point information obtaining means (13) is adapted to calculate a value indicating the matching degree of the focal point from a pixel value of a pixel in the area (64) of each image data.

6. The image outputting system according to claim 5, wherein the focal point information obtaining means (13) is adapted to calculate a value indicating variation between pixel values in an area of each of the image data as a value indicating the matching degree of the focal point.

7. The image outputting system according to claim 5 or 6, wherein the focal point information obtaining means (13) is adapted to calculate a value indicating the matching degree of a focal point from a pixel value regarding a specific color.

8. The image outputting system according to claim 1 or 2, wherein;
the specified area inputting means (12) is adapted to input information indicating the position of the area (64) in the images as information specifying the area in the images stored in the image storing part (11); and
the focal point information obtaining means (13) is adapted to divide the images into a plurality of areas (66), to store information indicating the matching degree of a focal point of each area (66) in advance, and to obtain information indicating the matching degree of the focal point of an area in which the position that has been indicated by the information input by the specified area inputting means (12) is included.

9. An image outputting method by an image outputting system as defined in claim 1 including an image storing part (11) for storing a plurality of images (60, 62) with different focal points in an imaging direction which are images of a predetermined imaging target, as image data, comprising:
a specified area inputting step (S13) for receiving, from a PC (30) information specifying an area (64) in the images (60, 62) stored in the image storing part (11);
a focal point information obtaining step (S14) for obtaining information indicating the matching degree of focal points of the area (64) of each of the plurality of images (60, 62) which has been specified by the information input in the specified area inputting step, stored in the image storing part;
an image selection step (S15) for selecting an image (60, 62) to be output from the plurality of images (60, 62) on the basis of information indicating the matching degree of focal points of each of the plurality of images obtained in the focal point information obtaining step; and
an outputting step (S17) for outputting the image (60, 62) which is stored in the image storing part (11) and selected in the image selection step.

10. An image outputting program causing a computer to carry out:
an image storage function for storing a plurality of images (60, 62) with different focal points in an imaging direction which are images of a predetermined imaging target, as image data;
a specified area inputting function for receiving, from a PC (30) information specifying an area (64) of the images (60, 62) stored by the image storage function;
a focal point information obtaining function for obtaining information indicating a matching degree of a focal point of the area (64) of each of the plurality of images (60, 62) which has been specified by the information input by the specified area inputting function, stored by the image storage function;
an image selection function for selecting an image (60, 62) to be output from the plurality of images (60, 62) on the basis of information indicating the matching degree of the focal point of each of the plurality of images (60, 62) obtained by the focal point information obtaining function; and an outputting function for outputting the image (60, 62) which is stored in the image storing part (11) and selected by the image selection function.

## Patentansprüche

1. Bildausgabesystem, umfassend:
einen Bildspeicherteil (11) zum Speichern einer Mehrzahl von Bildern (60, 62) mit unterschiedlichen Fokuspunkten in einer Bildgebungsrichtung, welche Bilder eines vorbestimmten Bildziels sind, als Bilddaten;
ein Spezifiziert-Bereichseingabemittel (12) zum Empfangen, aus einem PC (30), von Information, die einen Bereich (64) der in dem Bildspeicherteil (11) gespeicherten Bilder spezifiziert;
**gekennzeichnet durch** ein Fokuspunkt-Informationsermittlungsmittel (13) zum Ermitteln von Information, die einen Passungsgrad eines Fokuspunkts im Bereich (64) jedes der Mehrzahl von Bildern (60, 62) anzeigt, die **durch** die Informationseingabe **durch** das Spezifiziert-Bereichseingabemittel spezifiziert worden ist, gespeichert im Bildspeicherteil;
ein Bildauswahlmittel (14) zum Auswählen eines auszugebenden Bilds (60, 62) aus der Mehrzahl von Bildern (60, 62) auf Basis der Information, welche den Passungsgrad des Fokuspunkts jedes der Mehrzahl von Bildern anzeigt, welcher durch das Fokuspunkt-Ermittlungsmittel (13) ermittelt worden ist; und
ein Ausgabemittel (15) zum Ausgaben des Bilds (60, 62), das im Bildspeicherteil (11) gespeichert ist und **durch** das Bildauswahlmittel (14) ausgewählt ist.

2. Bildausgabesystem gemäß Anspruch 1, weiter umfassend ein Bildgebungsmittel zum Ermitteln der Mehrzahl von Bildern (60, 62), die im Bildspeicherteil (11) gespeichert sind, durch Bildgebung.

3. Bildausgabesystem gemäß Anspruch 1 oder 2, wobei das Spezifiziert-Bereichseingabemittel (12) ausgelegt ist, Information, die eine Position eines Cursors (63) anzeigt, der eine Position in dem Bildspeicherteil (11) gespeicherten Bildern (60, 62) angibt, einzugeben und den Bereich (64) auf Basis der Position des Cursors (63) zu spezifizieren.

4. Bildausgabesystem gemäß Anspruch 3, wobei das Spezifiziert-Bereichseingabemittel (12) ausgelegt ist, die Bewegung des Cursors (63) zu detektieren und den Bereich (64) auf Basis der Position des Cursors (63) in einem Fall zu spezifizieren, bei dem die Bewegung des Cursors (63) detektiert ist.

5. Bildausgabesystem gemäß einem der Ansprüche 1 bis 4, wobei das Fokuspunkt-Informationsermittlungsmittel (13) ausgelegt ist, einen Wert zu berechnen, der den Passungsgrad des Fokuspunkts anzeigt, aus einem Pixelwert eines Pixels in dem Bereich (64) aller Bilddaten.

6. Bildausgabesystem gemäß Anspruch 5, wobei das Fokuspunkt-Informationsermittlungsmittel (13) ausgelegt ist, einen Wert zu berechnen, der Variation zwischen Pixelwerten in einem Bereich aller Bilddaten als einen Wert zu berechnen, der den Passungsgrad des Fokuspunkts anzeigt.

7. Bildausgabesystem gemäß Anspruch 5 oder 6, wobei das Fokuspunkt-Informationsermittlungsmittel (13) ausgelegt ist, einen Wert zu berechnen, der den Passungsgrad eines Fokuspunkts anzeigt, aus einem Pixelwert bezüglich einer spezifischen Farbe.

8. Bildausgabesystem gemäß Anspruch 1 oder 2 wobei:
das Spezifiziert-Bereichseingabemittel (12) ausgelegt ist, Information, welche die Position des Bereichs (64) in den Bildern anzeigt, als Information, welche den Bereich in den in dem Bildspeicherteil (11) gespeicherten Bildern spezifiziert, einzugeben; und
das Fokuspunkt-Informationsermittlungsmittel (13) ausgelegt ist, die Bilder in eine Mehrzahl von Bereichen (66) zu teilen, um Information, welche den Passungsgrad eines Fokuspunkts jedes Bereichs (66) anzeigt, vorab zu speichern, und Information, welche den Passungsgrad des Fokuspunkts eines Bereichs, in welchem die Position, welche durch die durch das Spezifiziert-Bereichseingabemittel (12) eingegebene Information angezeigt worden ist, enthalten ist, zu ermitteln.

9. Bildausgabeverfahren durch ein Bildausgabesystem gemäß Anspruch 1, beinhaltend einen Bildspeicherteil (11) zum Speichern einer Mehrzahl von Bildern (60, 62) mit unterschiedlichen Fokuspunkten in einer Bildgebungsrichtung, die Bilder eines vorbestimmten Bildgebungsziels sind, als Bilddaten, umfassend:
einen Spezifiziert-Bereichseingabeschritt (S13) zum Empfangen, aus einem PC (30), von Information, die einen Bereich (64) in den Bildern (60, 62) spezifiziert, die im Bildspeicherteil (11) gespeichert sind;
einen Fokuspunkt-Informationsermittlungsschritt (S14) zum Ermitteln von Information, die den Passungsgrad von Fokuspunkten des Bereichs (64) jedes der Mehrzahl von Bildern (60, 62) anzeigt, welche durch die im Spezifiziert-Bereichseingabeschritt eingegebene Information spezifiziert worden sind, gespeichert im Bildspeicherteil;
einen Bildauswahlschritt (S15) zum Auswählen eines auszugebenden Bilds (60, 62) aus der Mehrzahl von Bildern (60, 62) auf Basis von Information, welche den Passungsgrad von Fokuspunkten jedes der Mehrzahl von Bildern anzeigt, der in dem Fokuspunkt-Informationsermittlungsschritt ermittelt ist; und
einen Ausgabeschritt (S17) zum Ausgeben des Bilds (60, 62),
das im Bildspeicherteil (11) gespeichert und im Bildauswahlschritt ausgewählt ist.

10. Bildausgabeprogramm, das einen Computer veranlasst, auszuführen:
eine Bildspeicherfunktion zum Speichern einer Mehrzahl von Bildern (60, 62) mit unterschiedlichen Fokuspunkten in einer Bildgebungsrichtung, die Bilder eines vorbestimmten Bildgebungsziels sind, als Bilddaten, umfassend:
eine Spezifiziert-Bereichseingabefunktion zum Empfangen, aus einem PC (30), von Information, die einen Bereich (64) in den Bildern (60, 62) spezifiziert, die in der Bildspeicherfunktion gespeichert sind;
eine Fokuspunkt-Informationsermittlungsfunktion zum Ermitteln von Information, die den Passungsgrad von Fokuspunkten des Bereichs (64) jedes der Mehrzahl von Bildern (60, 62) anzeigt, welche durch die in der Spezifiziert-Bereichseingabefunktion eingegebene Information spezifiziert worden sind, gespeichert durch die Bildspeicherfunktion;
eine Bildauswahlfunktion zum Auswählen eines auszugebenden Bilds (60, 62) aus der Mehrzahl von Bildern (60, 62) auf Basis von Information, welche den Passungsgrad von Fokuspunkten jedes der Mehrzahl von Bildern anzeigt, der durch die Fokuspunkt-Informationsermittlungsfunktion ermittelt ist; und
eine Ausgabefunktion zum Ausgeben des Bilds (60, 62), das im Bildspeicherteil (11) gespeichert und durch die Bildauswahlfunktion ausgewählt ist.

## Revendications

1. Système de sortie d'images, comprenant :
une partie de stockage d'images (11) pour stocker une pluralité d'images (60, 62) avec différents points focaux dans une direction d'imagerie qui sont des images d'une cible d'imagerie prédéterminée en tant que données d'images ;
des moyens d'entrée de zone spécifiée (12) pour recevoir d'un PC (30) des informations spécifiant une zone (64) des images stockées dans la partie de stockage d'images (11) ;
**caractérisé par** des moyens d'obtention d'informations de point focal (13) pour obtenir des informations indiquant un degré de correspondance d'un point focal dans la zone (64) de chacune de la pluralité d'images (60, 62) qui a été spécifiée par l'entrée d'informations par les moyens d'entrée de zone spécifiée, stockées dans la partie de stockage d'images ;
des moyens de sélection d'image (14) pour sélectionner une image (60, 62) à délivrer de la pluralité d'images (60, 62) sur la base des informations indiquant le degré de correspondance du point focal de chacune de la pluralité d'images qui a été obtenu par les moyens d'obtention d'informations de point focal (13) ; et
des moyens de sortie (15) pour délivrer l'image (60, 62) qui est stockée dans la partie de stockage d'images (11) et sélectionnée par les moyens de sélection d'image (14).

2. Système de sortie d'images selon la revendication 1, comprenant en outre des moyens d'imagerie pour obtenir la pluralité d'images (60, 62) stockées dans la partie de stockage d'images (11) par imagerie.

3. Système de sortie d'images selon la revendication 1 ou 2, dans lequel les moyens d'entrée de zone spécifiée (12) sont conçus pour saisir des informations indiquant la position d'un curseur (63) qui indique une position dans les images (60, 62) stockées dans la partie de stockage d'images (11) et pour spécifier la zone (64) sur la base de la position du curseur (63).

4. Système de sortie d'images selon la revendication 3, dans lequel les moyens d'entrée de zone spécifiée (12) sont conçus pour détecter le mouvement du curseur (63) et spécifier la zone (64) sur la base de la position du curseur (63) dans le cas où le mouvement du curseur (63) est détecté.

5. Système de sortie d'images selon l'une quelconque des revendications 1 à 4, dans lequel les moyens d'obtention d'informations de point focal (13) sont conçus pour calculer une valeur indiquant le degré de correspondance du point focal à partir de la valeur d'un pixel dans la zone (64) de chacune des données d'image.

6. Système de sortie d'images selon la revendication 5, dans lequel les moyens d'obtention d'informations de point focal (13) sont conçus pour calculer une valeur indiquant une variation entre les valeurs de pixels dans une zone de chacune des données d'image en tant que valeur indiquant le degré de correspondance du point focal.

7. Système de sortie d'images selon la revendication 5 ou 6, dans lequel les moyens d'obtention d'informations de point focal (13) sont conçus pour calculer une valeur indiquant le degré de correspondance d'un point focal à partir d'une valeur de pixel relative à une couleur spécifique.

8. Système de sortie d'images selon la revendication 1 ou 2, dans lequel :
les moyens d'entrée de zone spécifiée (12) sont conçus pour entrer des informations indiquant la position de la zone (64) dans les images en tant qu'informations spécifiant la zone dans les images stockées dans la partie de stockage d'images (11) ; et
les moyens d'obtention d'informations de point focal (13) sont conçus pour diviser les images en une pluralité de zones (66), pour stocker les informations indiquant le degré de correspondance d'un point focal de chaque zone (66) à l'avance et pour obtenir des informations indiquant le degré de correspondance du point focal d'une zone dans laquelle est incluse la position qui a été indiquée par les informations saisies par les moyens d'entrée de zone spécifiée (12).

9. Procédé de sortie d'images au moyen d'un système de sortie d'images tel que défini dans la revendication 1, comprenant une partie de stockage d'images (11) pour stocker une pluralité d'images (60, 62) avec différents points focaux dans une direction d'imagerie, qui sont des images d'une cible d'imagerie prédéterminée, en tant que données d'images, comprenant :
une étape d'entrée de zone spécifiée (S13) pour recevoir d'un PC (30) des informations spécifiant une zone (64) dans les images (60, 62) stockées dans la partie de stockage d'images (11) ;
une étape d'obtention d'informations de point focal (S14) pour obtenir des informations indiquant le degré de correspondance des points focaux de la zone (64) de chacune de la pluralité d'images (60, 62) qui a été spécifiée par l'entrée d'informations dans l'étape d'entrée de zone spécifiée, stockées dans la partie de stockage d'images ;
une étape de sélection d'image (S15) pour sélectionner une image (60, 62) à délivrer par la pluralité d'images (60, 62) sur la base des informations indiquant le degré de correspondance des points focaux de chacune de la pluralité d'images obtenues dans l'étape d'obtention d'informations de point focal ; et
une étape de sortie (S17) pour délivrer l'image (60, 62) qui est stockée dans la partie de stockage d'images (11) et sélectionnée dans l'étape de sélection d'image.

10. Programme de sortie d'images amenant un ordinateur à mettre en oeuvre :
une fonction de stockage d'images pour stocker une pluralité d'images (60, 62) avec différents points focaux dans une direction d'imagerie, qui sont les images d'une cible d'imagerie prédéterminée, en tant que données d'images ;
une fonction d'entrée de zone spécifiée pour recevoir d'un PC (30) des informations spécifiant une zone (64) des images (60, 62) stockées par la fonction de stockage d'images ;
une fonction d'obtention d'informations de point focal pour obtenir des informations indiquant un degré de correspondance d'un point focal de la zone (64), de chacune de la pluralité d'images (60, 62) qui a été spécifiée par l'entrée d'informations par la fonction d'entrée de zone spécifiée, stockées par la fonction de stockage d'images ;
une fonction de sélection d'image pour sélectionner une image (60, 62) à délivrer par la pluralité d'images (60, 62) sur la base des informations indiquant le degré de correspondance du point focal de chacune de la pluralité d'images (60, 62) obtenues par la fonction d'obtention d'informations de point focal ; et
une fonction de sortie pour délivrer l'image (60, 62) qui est stockée dans la partie de stockage d'images (11) et sélectionnée par la fonction de sélection d'image.
